# NEW EUROPEAN PATENT SPECIFICATION

(11) **EP 3 967 671 B2**
(45) Date of publication and mention of the opposition decision: **08.07.2026**
(45) Mention of the grant of the patent: 12.07.2023
(21) Application number: 20195972.3
(22) Date of filing: 14.09.2020
(51) Int. Cl.: C04B 7/32

(54) **CALCIUM ALUMINATE CEMENT (CAC), ITS USE AND PREPARATION**
CALCIUMALUMINATZEMENT (CAC), SEINE VERWENDUNG UND HERSTELLUNG
CIMENT D'ALUMINATE DE CALCIUM (CAC), SON UTILISATION ET SA PRÉPARATION

(43) Date of publication of application: 16.03.2022
(73) Proprietor: Almatis GmbH, 67065 Ludwigshafen (DE)
(72) Inventor: Götz-Neunhoeffer, Friedlinde, 91023 Erlangen (DE); Neubauer, Jürgen, 91023 Erlangen (DE); Hüller, Florian, 91023 Erlangen (DE); Kuiper, Stefan, 60528 Frankfurt (DE); Klaus, Sebastian, 60528 Frankfurt (DE); Buhr, Andreas, 60528 Frankfurt (DE)
(74) Representative: Hoefer & Partner Patentanwälte mbB

(56) References cited:
- CN-A- 1 273 943
- JP-A- 2000 044 355

## Description

The present invention concerns a use of calcium aluminate cement (CAC).

The preparation of calcium aluminate cements (CAC) is known in the art. The development of CACs started in the 19th century. They were initially developed for their chemical resistance. Later the CAC was recognised for its fast strength development and refractory properties. Towards the middle of the 20th century, high purity calcium aluminate cements were developed, and they still have an important role in the industry today. These high purity CACs were used in further development of castable technologies for low moisture, self-levelling, vibration and wet gunning applications. For many applications, such as pre-cast shapes, e.g. when inside moulds are applied, the properties of the CACs in the prior art are disadvantageous regarding the shrinkage behaviour and the controlled strength development.

CN 1273943A discloses a calcium aluminate clinker CA2>70wt% and CA<30wt%. JP 2000044355A discloses the manufacturing of a clinker by mixing Al2O3, SiO2 and CaO materials and sintering them.

In view of the prior art, it is an object underlying the present invention to provide a Calcium Aluminate Cement (CAC) having an advantageous setting behavior and strength development, and an improved shrinkage behavior. This should allow improved use, in particular in applications requiring controlled shrinkage and good strength development, such as pre-cast applications, in particular when inside moulds are applied.

The solution to the above captioned problem is described in the independent claims. The dependent claims contain advantageous embodiments of the present invention.

Within the present invention, the terms Calcium Aluminate Cement, Calcium Aluminum Cement and CAC are used interchangeably.

The present invention concerns the use of a Calcium Aluminate Cement (CAC) containing at least 75 wt.-% CA₂ and at least 3 wt.-% CA as claimed. CA as an abbreviation for CaAl₂O₄ and CA₂ as an abbreviation for CaAl₄O₇ are known to the skilled person. According to a preferred embodiment, the weight percentage (wt.-%) of CA and CA₂, respectively, as indicated herein (unless stated otherwise) is calculated on the basis of the total amount (weight) of calcium aluminate phases present in the cement.

According to a further preferred embodiment, "calcium aluminate phases" is defined as the total amount (i.e. the sum of) of CA, CA₂, CA₆ and C₁₂A₇ phases present in the cement (CAC), in particular as the total amount of CA and CA₂ phases present in the cement (CAC). Accordingly, in a preferred embodiment, the weight percentage (wt.-%) of CA and CA₂, respectively, is calculated on the basis of the total amount (weight) of CA, CA₂, CA₆ (if present) and C₁₂A₇ (if present) phases present in the cement, in particular on the basis of the total amount of CA and CA₂ phases present in the cement.

The wt.-% indicated herein are on dry weight basis, i.e. upon drying at 110°C for 1 h under 1 atm.

The content of CA and CA₂, respectively, as well as CA₆, C₁₂A₇ and alpha-Al₂O₃ is determined by powder x-ray diffraction and quantified by the Rietveld profile refinement method. [Rietveld HM., J. Appl. Cryst., 2 (1969), page 65-71].

It has been surprisingly found that a CAC having a high content of at least 75 wt.-% CA₂ and at least 3 wt.-% CA as set out herein has advantageous and controlled setting behavior and strength development, and an improved shrinkage behavior, allowing its improved usability for a great number of applications desired in the art. Thus, the shrinkage behavior and setting behavior of the CAC is such that for example pre-cast shape applications.

According to a preferred embodiment, the CA content is between 3 wt.-% and 30 wt.-%, more preferably between 4 wt.-% and 20 wt.-% and most preferably between 5 wt.-% and 15 wt.-%.

According to another embodiment of the present invention, the ratio of CA₂ to CA of the calcium aluminate phases in the CAC is at least 2.3 and is at most 32.3, more preferably at least 4 and at most 24 and most preferably at least 5.7 and at most 19. This ratio is preferably also maintained if the CAC contains other components further to the calcium aluminate phases.

The CAC as defined in the claims has a well-controlled hydration behaviour which provides advantages especially for pre-cast shape production of items such as well blocks or EAF delta sections, which incorporate inner moulds or cores. The setting shrinkage, strength development and setting behaviour provided allow ample and advantageous application of the CAC, as well as the use of conventional additive mixtures as known to the skilled person. When comparing the properties of the CAC to a conventional 70% Al₂O₃ cement (e.g. tradename CA-14 M of Almatis GmbH, DE), a much slower shrinkage rate was achieved. The strength development is initially slower, but continues for days resulting in higher strength levels. At dried temperatures, the CAC also showed higher strength levels. After firing at temperatures of 1000°C or higher, comparable strength levels were obtained.

According to a preferred embodiment of the invention, the particle size distribution, determined by laser diffraction according to ISO 13320, is as follows. According to a preferred embodiment, the particle size distribution as defined herein refers to the calcium aluminate phases present in the CAC, in particular the CA₂ and CA phases. According to a further embodiment, it refers to the particle size distribution of the whole CAC. It is preferred if the particle size distribution is such that the D₅₀ is at most 6 µm, in particular at most 5 µm. D₅₀ denotes that the portions of particles with diameters smaller and larger than this value are 50% (by volume). D₅₀ is also known as the median diameter. Correspondingly, D₁₀ denotes that the portion of particles with diameters below this value is 10%, D₉₀ denotes that the portion of particles with diameters below this value is 90%, and D₁₀₀ denotes that the portion of particles with diameters below this value is 100%.

According to a further preferred embodiment of the invention, the particle size distribution is such that the D₅₀ is between 6 µm and 1 µm, preferably between 5 µm and 3 µm, more preferably between 3.5 µm and 4.5 µm.

In many cases, advantageous properties of the CAC are obtained when the particle size distribution is such that the D₉₀ is at most 30 µm, in particular at most 28 µm, in particular when the particle size distribution is such that the D₉₀ is between 5 µm and 30 µm, preferably between 10 µm and 27 µm, more preferably between 15 µm and 26 µm.

It has been found that, according to a preferred embodiment, the particle size distribution should be such that the D₁₀₀ is 45 µm or less, and/or the D₁₀ is between 0.10 µm and 1 µm. According to a preferred embodiment of the present invention, the CAC contains at least 80 wt.-% CA₂. According to one embodiment, the CAC contains at most 97 wt.-% CA₂, preferably at most 96 wt.-% CA₂, more preferably at most 95 wt.-% CA₂.

It has been surprisingly found, that particularly advantageous properties of the CAC may be obtained if it contains at least 0.5 wt.-% amorphous calcium aluminate phases, preferably at least 1 wt-% amorphous calcium aluminate phases, most preferably at least 2 wt-% amorphous calcium aluminate phases. Further, it is preferred that the CAC contains less than 15 wt.-% amorphous calcium aluminate phases, preferably less than 10 wt-% amorphous calcium aluminate phases, most preferably less than 8 wt-% amorphous calcium aluminate phases. Calcium aluminate phases in this respect means any consisting of the group of CA, CA₂, CA₆ and C₁₂A₇ phases, or mixtures thereof. Preferably, it means CA₂ and/or CA, in particular CA₂.

The amorphous calcium aluminate phases may be obtained by very intensive milling, e.g. of the CA₂ starting material. It has been found that the inclusion of the amorphous material as defined above can be used to optimize the shrinkage rate while maintaining good strength development.

According to one aspect of the present invention, the CAC contains a defined amount CA, allowing the provision of advantageous properties of the resulting mixture. Thus, the CA content may be at least 4 wt.-% CA, preferably at least 5 wt.-% CA. Also, the CA content may be at most 25, preferably at most 20, more preferably at most 15 wt.% CA. As mentioned above, according to a preferred embodiment, the CA content is between 3 wt-% and 30 wt-%, more preferably between 4 wt-% and 20 wt-% and most preferably between 5 wt% and 15 wt%.

According to a further aspect of the present invention any other calcium aluminate phase present in the CAC is present only in comparatively small amounts. Thus, it has been found advantageous if the CAC contains less than 1 wt.-% C₁₂A₇, and less than 5 wt.-% CA₆ and less than 5 wt.-% alpha-Al₂O₃. However, a content of at least 2 wt.-% of CA₆ and at least 2 wt.-% alpha-Al₂O₃ has been found to provide positive setting and shrinking results in some cases. In other embodiments, the CAC of the present invention contains less than 1 wt.-% C₁₂A₇, and less than 0.1 wt.-% CA₆ and less than 0.1 wt.-% alpha-Al₂O₃.

As mentioned above, an important aspect of the present invention is directed to a high aluminum containing calcium aluminate cement, containing aluminum, calculated as Al₂O₃ in the range from 72 to 78 wt.-%, in particular 73 to 77 wt.-%, based on the total weight of the calcium aluminate cement.

According to a further preferred embodiment, the CAC contains calcium, calculated as CaO in the range from 20 to 30 wt.-%, in particular 20 to 26 wt.-%, based on the total weight of the calcium aluminate cement.

According to a further important aspect of the present invention, it has been found advantageous if the CAC contains less than 0.5 wt.-% Si, calculated as SiO₂, and in particular less than 0.5 wt.-% of each of Si (calculated as SiO2), Na (calculated as Na₂O), Fe (calculated as Fe₂O₃) and Mg, calculated as MgO. According to one preferred aspect of the present invention, the CAC contains less than 0.5 wt.-% of each of Si (calculated as SiO₂), Na (calculated as Na₂O), Fe (calculated as Fe₂O₃), Mg (calculated as MgO) and Ti (calculated as TiO₂). All calculations based on SiO₂, Na₂O, Fe2 O₃, MgO and TiO₂ are based on the total weight of the calcium aluminate cement.

In general, according to a preferred embodiment, the CAC is a low Fe or "Fe-free" CAC, meaning that it is containing less than 0.5 wt.-% Fe, in particular less than 0.2, or less than 0.1 wt.-% Fe, calculated as Fe₂O₃, based on the total weight of the CAC.

Further, the sum of Si (calculated as SiO₂), Na (calculated as Na₂O), Fe (calculated as Fe₂O₃), and optionally Mg (calculated as MgO) is less than 1 wt.-%, based on the total weight of the calcium aluminate cement. It has been found that these embodiments of the present invention in many cases show the most advantageous shrinkage and setting behavior.

The calcium aluminate cement may be produced by any method as known to the skilled person in the art. The preparation of the CA and CA₂ materials is well known in the art. For example, it is referred to Hart LD, Alumina Chemicals Science and Technology handbook, ISBN 0-916094-33-2, page 171-180.

According to one embodiment of the present invention, the raw materials used for the preparation of the CAC include 20 to 30 wt.-%, preferably 20 to 26 wt.-% of calcium, calculated as CaO, and 73 to 80 wt.-%, preferably 74 to 78 wt.-% aluminum oxide, calculated as Al₂O₃, based on the total weight of raw materials used.

It has been found advantageous regarding the shrinkage behavior and strength development of the CACs, if the ratio of calcium (calculated as CaO) to aluminum oxide (calculated as Al₂O₃) in the CAC is between 0.25 to 0.35, preferably 0.28 to 0.32.

The CAC as described herein has an advantageously controlled hydration and lower shrinkage rates compared to known high alumina CACs. It enables more predictable and flexible production for time-sensitive processes, such as the removal of inner cores in pre-cast shape production. The strength level of the CAC can be higher with longer curing times. According to one aspect, the CAC provides advantages in cases where a more gradual hydration is needed. This is especially beneficial for a number of applications/uses, e.g. the synchronization of pre-cast shape production process steps such as the removal of inner cores of nozzles, well blocks or EAF delta sections. The CAC yields slower shrinkage rates during hydration which is e.g. beneficial to avoid seizure of inner-moulds and build-up of internal stresses. This enables more flexibility in pre-cast shape production scheduling.

The CAC offers good initial strength, continuous strength development, and high dried strength. The relatively high initial strength of the CAC right after the start of hydration, allows handling of pre-cast shape pieces for further processes at an earlier stage. The strength continues to develop during curing as well as drying.

Compared to high alumina cements as known in the art, no recipe adjustment is required to use the CAC in place of other cements.

The present invention is directed to the advantageous uses of the CAC as claimed. Thus, it has been unexpectedly found that the composition of the CAC as described above allows improved properties of the CAC for a number of different uses, including improved handling and application results.

Thus, the present invention concerns the use of a calcium aluminate cement as described herein in pre-cast shape production.

An important aspect is directed to the use of the CAC in (for the preparation of) castable formulations, in particular for high purity based formulations, i.e. at least 70 wt.-% alumina, calculated as Al₂O₃, based on the total weight of the composition.

According to the invention, the CAC is used in pre-cast shape production, in particular for facilitating removal of inner cores from moulds, preferably in the production of well blocks, seating or pocket blocks, nozzles or sleeves, burner blocks, ducts, electric arc furnace (EAF) delta sections, pre-cast pieces for steel ladle bottoms, or top blocks in aluminium anode reduction cells. Thus, in pre-cast shape applications, the CAC allows improved handling and results, e.g. facilitating the removal of inner moulds.

In the viscous stage before hydration, the volume of the castable reduces due to densification and degassing. The shrinkage becomes critical when hydration starts and the aggregates are fixed. Preliminary research on this topic has shown that chemical shrinkage takes place within 30 minutes when common high alumina CAC is used as a binder. When the castable cannot shrink due to the presence of the inside mould, internal stresses of around 4-6 MPa will be created. Therefore the inside mould must not be removed too late in order to avoid cracking. In addition, enough strength has to be developed to keep the material in shape and avoid slumping. The potential of clamping of the inner moulds and related internal stresses can be determined by measuring the dimension changes of a castable during the hydration.

The different uses as such of the CAC as set out herein are principally well known to the skilled person and a further advantage is that the CAC can be used in those applications/uses principally in the same manner, i.e. in the same amounts and processes as known in the art.

Also, the additives and additives mixtures as applied in the prior art can be used without modification for the CACs. Preferably, alumina fillers as known in the art are used in combination with the CACs.

Precast shape production is used to produce large quantities of pieces with specific shapes. In many cases, precast shape producers have issues with clamping inner moulds and cracking pieces. The reason for these issues can be related to volume shrinkage during hydration of the used cement. Even relative small shrinkage is causing a clamping of the inner mould and high internal stresses. In the worst case, cracking can occur due to the internal stresses which becomes visible after drying. The point in time to remove the inner mould is critical, because the hydration needs to be enough to have sufficient strength and should not be too much to avoid clamping. In a preliminary study, it was found that in standard castables the shrinkage rate is relative high and that the internal stresses are building within short times.

The CAC has a well-controlled shrinkage rate. The shrinkage rate after hydration is slowed down, while the strength development is continuously taking place. In the castable the CAC has similar hydration times compared to regular 70% Al₂O₃ cement with the same dosing of dispersing aluminas, such as ADS/ADW (obtained from Almatis GmbH, DE). Dispersing aluminas and other dispersing agents are commonly used to de-agglomerate the fine particles of the matrix. The matrix of refractory low cement castables contains fine and ultra-fine particles such as calcium aluminate cement, reactive aluminas and silica fume. It is essential that all the matrix components are homogeneously distributed during mixing with water to take full advantage of the optimized particle size distribution, and achieve the lowest water demand and desired rheological behaviour.

Surprisingly, with the CAC, there is no stiffening taking place before the hydration starts. The point in time to remove an inner mould is advantageously less critical. The lack of the stiffening stage can be used to gain more flexibility by accelerating the hydration and shorten process cycles.

For successful pre-cast shape production, good workability, predictable setting time and good strength development are needed. These properties are determined by the calcium aluminate cement used and can be steered by additive systems, and the CAC provides particular advantages in this respect. For pre-cast shape production timing is important. Enough workability time is needed to be able to fill the moulds. With many additive systems known in the art, a stiffening takes place when the material stops flowing, however, sufficient strength is not yet obtained. Sufficient strength is generated during the hydration when hydrate phases are formed. Strength development is needed to be able to further process the pre-cast shape. Further processes require temperature treatment. The final strength will be obtained by sintering calcium aluminate phases with alumina from the fine fillers and aggregates to form calcium hexa-aluminate.

A further aspect of the disclosure is directed to a composition, in particular a cementitious composition comprising at least 1 wt-% (e.g. for ultra low cement containing castables) and up to 20 wt-% (e.g. for conventional castables) of the calcium aluminate cement containing at least 75 wt.-% CA2 and at least 3 wt.-% CA, based on the total amount of calcium aluminate phases present in the cement. In principle, the cementicious composition could however also comprise only the CAC, as described herein, and water, and only optionally further components.

The further components can be selected from those known in the art, and in particular those beneficial for cementitious compositions, in particular for castables. Those components include, besides water, alumina, e.g. alpha-alumina. One usual example of a conventional additional component is tabular alumina. As known to the skilled person, tabular alumina is a re-crystalline sintered alpha-alumina (alumina-based aggregate) with high density. Other conventional additional components include calcined alumina, such as e.g. CTC 50 or CL 370 from Almatis GmbH, DE. Other additional components are alumina coated with a dispersing polymer, e.g. used as a setting retarder or a setting accelerator, such as e.g. ADS 3 and ADW 1, respectively, from Almatis GmbH, DE. However, the additional components are principally not limited and may include any other component which is not detrimental for the CAC and its (hydraulic) binder function. Examples include refractory bauxite, Magnesia-Alumina spinel, Aluminosilicate aggregates, limestone, fly ash, silica- containing materials such as silica flour or silica fume, additives to improve the rheology and/or setting accelerating and/or retarding additives.

The invention will now be further illustrated, without restriction, by the following Examples.

### FIGURES:

Fig. 1: Exothermal curves self-flow castable with CA-14M and CA-INV (CAC as defined in the claims)
Fig. 2: Shrinkage curves self-flow castable of CA-14 M and CA-INV
Fig. 3: Shrinkage rate self-flow castable with CA-14 M and CA-INV
Fig. 4: Cold Crushing Strength development self-flow castable with CA-14 M and CA- INV
Fig. 5: Cold Modulus of Rupture strength development self-flow castable with CA-14 M and CA- INV
Fig. 6: Cold Crushing Strength of self-flow castable with CA- INV vs. CA-14 M for cured and dried test bars
Fig. 7: Cold Modulus of Rupture for self-flow castable with CA- INV vs. CA-14 M for cured and dried samples
Fig. 8: Exothermal curves vibration castable with CA-14 M and CA- INV with different ratios of dispensing alumina ADS 3/ADW 1
Fig. 9: Plotted time peak temperature of vibration castable with CA-14 M and CA-INV with different ratios ADS 3/ADW 1
Fig. 10: Cold Crushing Strength development of vibration castable with CA- INV vs. CA-14 M
Fig. 11: Cold Modulus of Rupture development of vibration castable with CA-INV vs. CA-14 M
Fig. 12: Cold Crushed strength temperature treated vibration castables with CA-14 M and CA-INV
Fig. 13: Cold Modulus of Rupture of vibration castable with CA-INV vs. CA-14 M after different pre-firing temperatures
Fig. 14: Hot Modulus of Rupture at 1500°C of vibration castables with CA-INV vs. CA-14 M prefired at 1000 and 1500°C

A CAC as defined in the claims, called CAC-INV hereinafter, was prepared as follows:
A mixture of CaO and Al₂O₃, with a ratio to obtain the desired CA₂/CA ratio, was prepared. Clinker was produced from the mixture of CaO and Al₂O₃ in a rotary kiln. CAC-INV was produced by milling the clinker with a high energy mill, in particular a ball mill.

| Chemistry | CAC-INV |
|---|---|
| CaO [wt%] | 23 |
| Al₂O₃ [wt%] | 76 |
| Na₂O [wt%] | 0.3 |
| SiO₂ [wt%] | 0.1 |
| Fe₂O₃ [wt%] | 0.1 |
| MgO [wt%] | 0.2 |

| Phase composition | CAC-INV |
|---|---|
| C₁₂A₇ [wt%] | 0 |
| CA [wt%] | 5 |
| CA₂ [wt%] | 90 |
| CA₆ [wt%] | 0 |
| Alpha -Al₂O₃ [wt%] | 3 |
| Amo rphous [wt%] | 2 |

| Particle size distribution | CAC-INV |
|---|---|
| D10 [µm] | 0.5 |
| D50 [µm] | 4 |
| D90 [µm] | 22 |
| -45 µm [%] | 100 |

A PSA 1090 model from Anton Paar GmbH, AT, laser diffractometer was used to determine the particle size distribution. The equipment was calibrated according to ISO 13320. The cement was dispersed into isopropyl alcohol for 180 seconds inside the device before the measurement.

CA-14 M is a 70% Al₂O₃ CAC obtained from Almatis GmbH, DE for comparison to CAC-INV.

The castables were prepared in a Hobart mixer. The solid components were added and dry mixed for one minute. After one minute the water was added and the mix wet mixed for a further four minutes. Part of the castable was poured into a plastic box and a thermocouple wire added to measure the exothermal reaction. A Schleibinger cone (see DE 10046284A and www.schleibinger.com) was filled to a height of twelve centimetres with a half cone angle of 30°. Test bars for strength measurements were cast in moulds with dimensions of 40 mm * 40 mm * 160 mm. All experiments were performed in a temperature controlled laboratory at 20°C. The castable recipes are shown in Table 1.

**Table 1: Castable recipes**

| | **Self-flow** | **Self-flow** | **Vibr.** | **Vibr.** |
|---|---|---|---|---|
| **Tabular** | | | | |
| 3 - 6 mm [wt%] | 25 | 25 | 20 | 20 |
| 1 - 3 mm [wt%] | 15 | 15 | 20 | 20 |
| 0.5 - 1 mm [wt%] | 11 | 11 | 10 | 10 |
| 0.2-0.6 mm [wt%] | 6 | 6 | 10 | 10 |
| 0 - 0.2 mm [wt%] | 12 | 12 | 15 | 15 |
| -45 µm [wt%] | 9 | 9 | | |
| -20 µm [wt%] | | | 7 | 7 |

| **Calcined alumina** | | | | |
|---|---|---|---|---|
| CTC 50 [wt%] | 17 | 17 | | |
| CL 370 [wt%] | | | 13 | 13 |

| **Cement** | | | | |
|---|---|---|---|---|
| CA-14 M [wt%] | 5 | | 5 | |
| CAC-INV [wt%] | | 5 | | 5 |
| | | | | |

| **Additives** | | | | |
|---|---|---|---|---|
| ADS 3 [wt%] | 0.3 | 0.3 | 0.2-0.8 | 0.2-0.8 |
| ADW 1 [wt%] | 0.7 | 0.7 | 0.8 - 0.2 | 0.8 - 0.2 |
| | | | | |
| **Water [wt%]** | **4**.5 | **4**.5 | **4**.5 | **4**.5 |

Tabular is an alumina-based aggregate which is obtained from Almatis GmbH. As calcined alumina CTC 50 or CL 370 is used which is obtained from Almatis GmbH. ADS 3 is an alumina coated with a dispersing polymer and is used as setting retarder. ADW 1 is an alumina coated with a dispersing polymer and is used as setting accelerator. Both dispersing aluminas are obtained from Almatis GmbH.

CAC-INV was compared to CA-14 M in a self-slow castable as well as a vibration castable. The description of the different types of castables is described in ISO 1927 Part I.

All shrinkage measurements on the recipes were repeated four times and averages taken for further data analysis. For the self-flow castable, curing times of 3.5 - 48 hours were used. To determine the dried strength bars were cured for 6 and 24 hours, before drying at 110°C in a furnace for a further 24 hours. The standard ratio of dispersing alumina ADS 3/ADW 1 (obtained from Almatis GmbH, DE) for the vibration castable was 0.2/0.8. This ratio was used to prepare the strength bars. Curing times of 2 - 72 hours were used. For temperature treated bars, standard curing was 24 hours, followed by a further 24 hours drying. Dried bars were fired for five hours at 350°C, 1000°C, 1500°C and 1650°C. The hot modulus of rupture was measured at 1500°C for bars pre-fired at 1000°C or 1500°C for five hours.

### Exothermal measurements self-flow castable

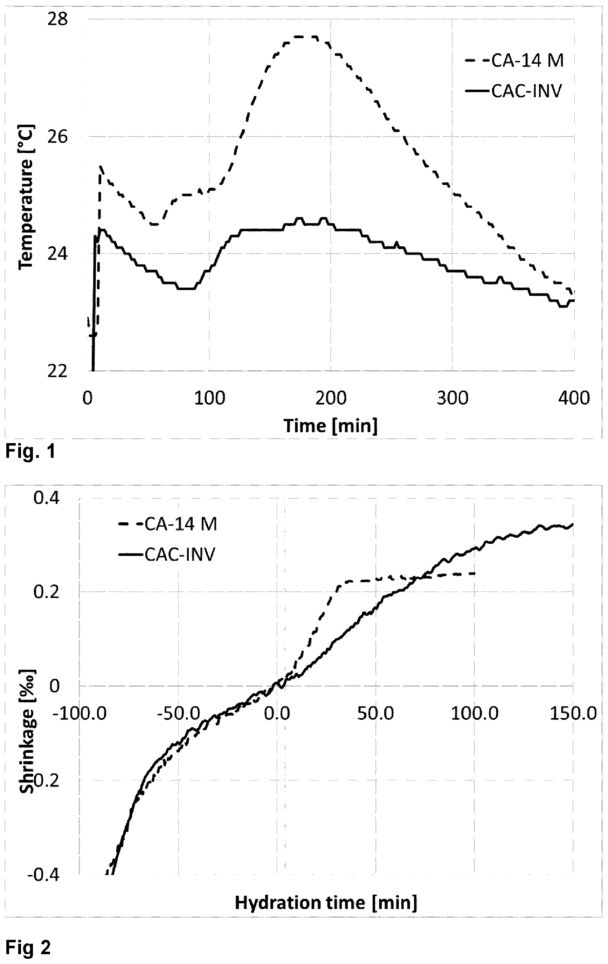

In the exothermal curve, shown in Figure 1, three stages could be determined when CA-14 M was used as CAC. During mixing the temperature increased to about 25°C due to friction. In this first stage the mix is self-flowing and slowly cools. After this first stage a small increase of about 0.5°C could be observed which starts 60 minutes after mixing when CA-14 M was used. This peak is in conjunction with a stiffening behaviour of the mix. Only minimal strength is obtained at this point. Pieces at this time can be easily damaged when external forces are applied. Hydration takes place in the last stage. During this stage hydrates are formed and a strength is obtained. When CA-14 M is used this starts at 100 minutes and the maximum temperature was reached after 180 minutes. The main hydration of CA-INV resulted in much lower temperatures in the exothermal curve. The total temperature increase is about 1°C. The stiffening peak cannot be identified which may be caused by the overlap with the relative small hydration peak. The temperature starts to increase after 90 minutes and the peak temperature is reached after 176 minutes which is similar to CA-14 M.

### Shrinkage measurements self-flow castable

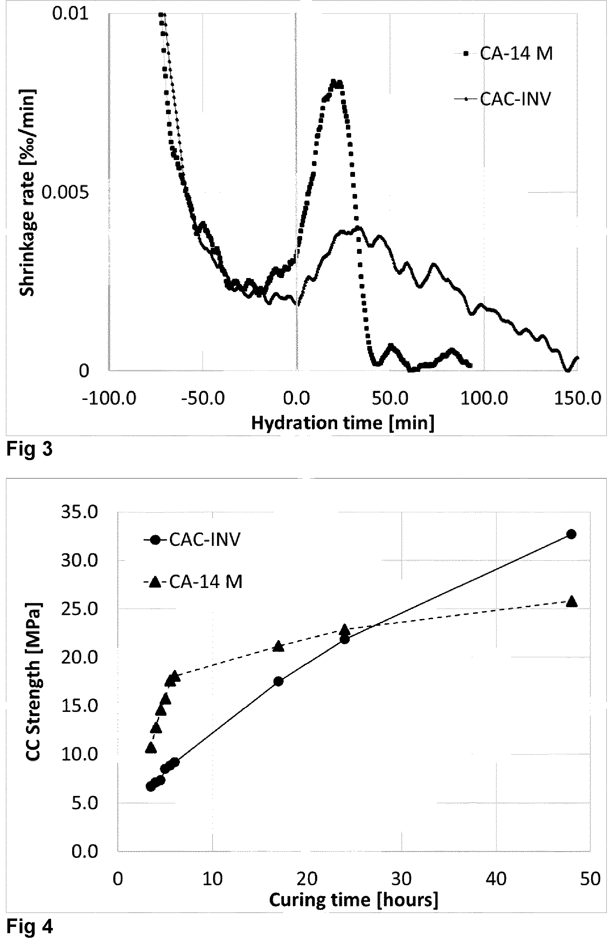

In the shrinkage curve the three stages can also be identified. In the first stage the castable is still self-flowing and densification takes place, due to rearrangement of aggregates and degassing. Because internal stresses are only created during the hydration, the shrinkage is compared from the start of the hydration. In the shrinkage curve the start of hydration can be easily determined by the increase of shrinkage rate caused by density changes. The shrinkage curves are plotted in Figure 2 and the shrinkage rate, which is the derivative of the shrinkage curves, is plotted in Figure 3. The shrinkage rate curve of CA-INV is flattened when compared to CA-14 M and as a result the shrinkage time of CA-INV in the self-flow castable is 145 minutes, while the chemical shrinkage of CA-14 M takes 40 minutes. The final shrinkage for CA-INV is 0.34‰ which is higher than that of CA-14 M which is 0.24‰. The final shrinkage is determined by the aggregate framework. Nevertheless the time window to remove an inside mould is increased significantly.

### Strength development self-flow castable

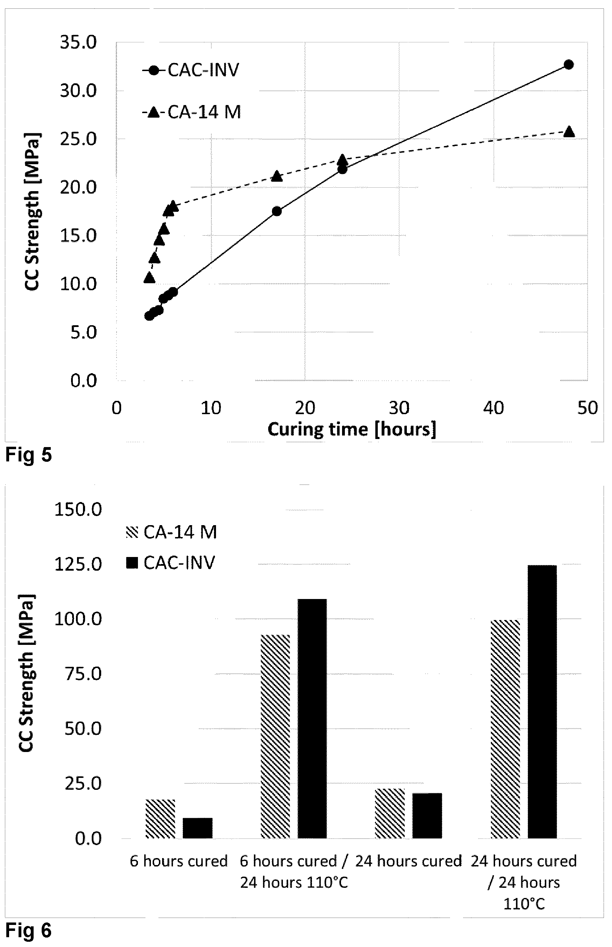

The strength levels were measured in the first hours of hydration and are plotted in Figures 4 and 5. The first strength was measured at 3.5 hours which is about 1 hour after the start of hydration. For both types of CAC a significant strength level was already generated, a cold crushing strength of 6.7 MPa for CA-INV and 10.7 MPa for CA-14 M. It is expected that in many cases this strength is high enough to lift and transport pieces. For CA-INV the strength development is slower, but continues for days, resulting in comparable 24 hour strength levels to CA-14 M and higher strength levels for bars cured for longer than 24 hours.

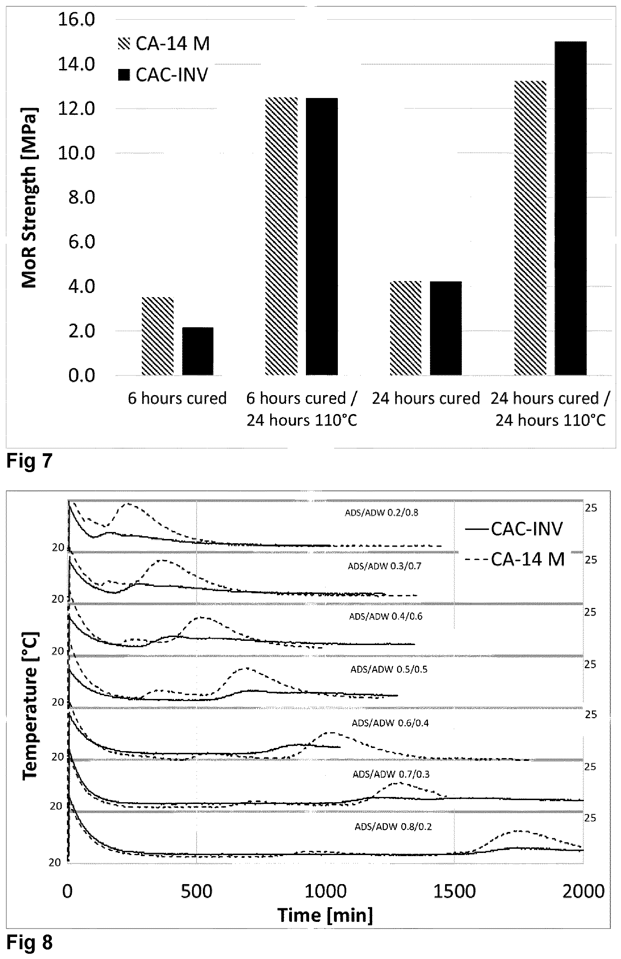

Test bars were dried after 6 hours curing time and 24 hours curing time. The strength levels of the bars are plotted in Figure 6 and 7. Although the 6 hour cured strength of CA-INV is lower than the strength of CA-14 M, the dried cold crushing strength of CA-INV is 109 MPa which is higher than the 93 MPa of CA-14 M. Longer curing times lead to even higher dried strength. For CA-INV a dried strength of 125 MPa was measured, while CA-14 M shows a strength of 100 MPa. Higher strength levels will be obtained when CA-INV is used, by longer curing times and/or by temperature treatment.

### Setting time adjustment vibration castable

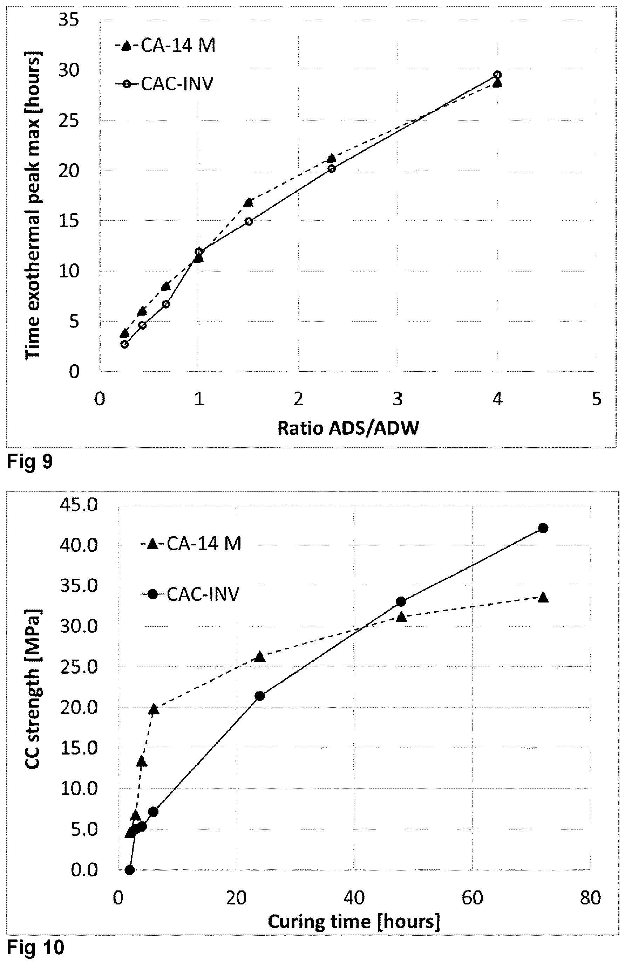

Different ratios of dispersing alumina ADS/ADW were used for the vibration castable with CA-14 M as well as with CA-INV. The exothermal curves are shown in Figure 8. In the exothermal curves of CA-14 M a first stiffening peak can be observed and later the main hydration peak. For CA-INV only the main hydration peak was observed. Although the hydration peak temperatures of CA-INV are lower, the start and also the maximum temperatures can be controlled similar to CA-14 M. The effect of the ratio ADS 3/ADW 1 on the setting times is plotted in Figure 9. CA-INV could be used in known recipes without changing the additive system, having the same water demand, and comparable setting times.

### Strength development vibration castable

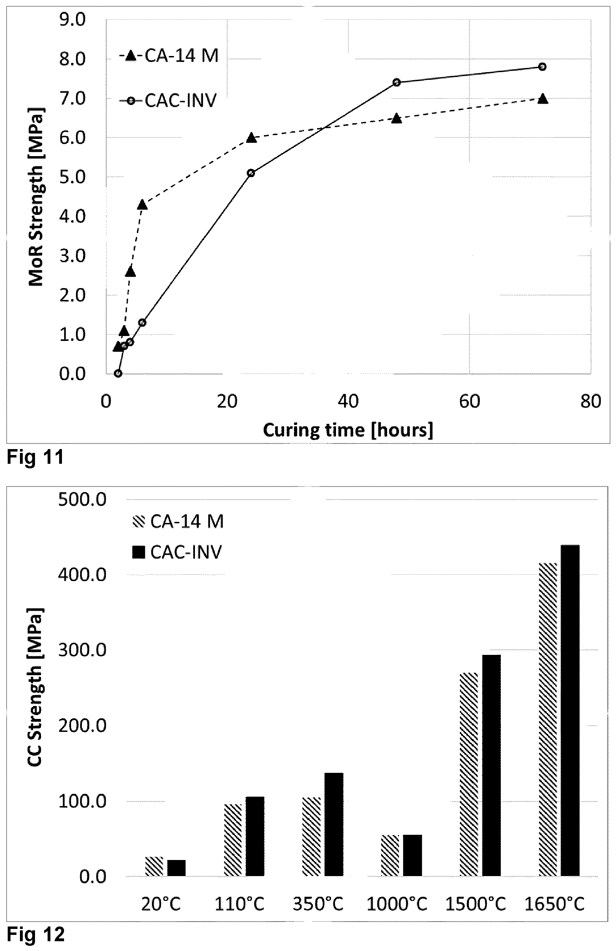

The strength development was determined for an dispersing alumina ADS 3/ADW 1 ratio of 0.2/0.8. For CA-INV the hydration started at around 2.5 hours, while for CA-14 M it started at around 1.5 hours. The strength development is shown in Figure 10 and 11. The strength development for CA-INV started one hour later, due to the setting time. As with the self-flow castable, the strength development of CA-14 M is higher in the first hours and then slows down. It can be seen that the initial strength obtained immediately after hydration is 5 MPa cold crushing strength for CA-SYNC and also for CA-14 M. For CA-INV the strength development is slower when compared to CA-14, but continues for days. This strength should be sufficient for pre-cast shapes to be demoulded properly and handled for further processing. For larger pre-cast shapes such as EAF delta sections a separate removal of inner cores and the outer mould would be recommended in order to enable more strength development before handling the large pieces.

### Strength during temperature treatment vibration castable

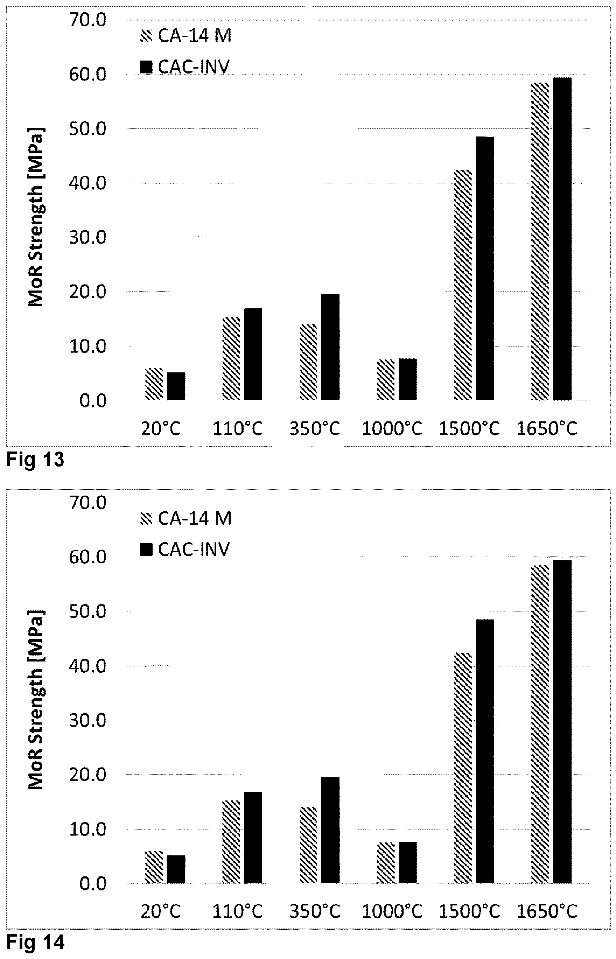

Bars were cured for 24 hours and further processed at different temperatures. The strength obtained after temperature treatment is shown in Figures 12 and 13. CA-INV showed higher strength levels in bars treated at intermediate temperatures (110°C and 350°C). The strength levels of bars treated at 1000°C or higher show comparable strengths for CA-INV and CA-14 M. This can be explained by the fact that the strength is determined by sintering of the mineralogical phases. Also the hot modulus of rupture at 1500°C for samples pre-fired at 1000°C and 1500°C, shown in Figure 14, give comparable values.

### CONCLUSIONS

CAC-INV shows a much slower setting shrinkage rate. This enables pre-cast shape producers to have a longer time window for the removal of inside moulds. The setting times of CA-INV can be controlled by ADS 3/ADW 1 comparable to known recipes with 70% Al₂O₃ CAC. The controlled hydration also results in higher strength levels by longer time curing and the following drying. At higher temperatures than 1000°C the strength levels are determined by sintering and are comparable to castables using CA-14 M. CA-INV enables pre-cast shape producers to synchronise their processes to times which suits their schedule.

The slower yet well-controlled hydration behaviour of the CA-INV cement can also provide advantages in other applications other than pre-cast shape production, as mentioned herein.

## Claims

1. Use of a calcium aluminate cement in pre-cast shape production, in particular for facilitating removal of inner cores from moulds, preferably in the production of well blocks, seating or pocket blocks, nozzles or sleeves, burner blocks, ducts, electric arc furnace (EAF) delta sections, pre-cast pieces for steel ladle bottoms, or top blocks in aluminum anode reduction cells, the calcium aluminate cement containing at least 75 wt.-% CA₂ and at least 3 wt.-% CA, based on the total amount of calcium aluminate phases present in the cement.

2. Use according to claim 1, wherein the particle size distribution of the calcium aluminate cement is such that the D₅₀ is at most 6 µm, in particular at most 5 µm.

3. Use according to any of the preceding claims, wherein the particle size distribution of the calcium aluminate cement is such that the D₅₀ is between 6 µm and 1 µm, preferably between 5 µm and 3 µm, more preferably between 3.5 µm and 4.5 µm.

4. Use according to any of the preceding claims, wherein the particle size distribution of the calcium aluminate cement is such that the D₉₀ is at most 30 µm, in particular at most 28 µm, and/or
wherein the particle size distribution is such that the D₉₀ is between 5 µm and 30 µm, more preferably between 10 µm and 27 µm, further preferably between 15 µm and 26 µm, and/or
wherein the particle size distribution is such that the D₁₀₀ is 45 µm or less, and/or the D₁₀ is between 0.10 µm and 1 µm.

5. Use according to any of the preceding claims, the calcium aluminate cement containing at least 80 wt.-% CA₂, and at most 97 wt.-% CA₂, preferably at most 96 wt.-% CA₂, more preferably at most 95 wt.-% CA₂.

6. Use according to any of the preceding claims, the calcium aluminate cement containing at least 4 wt.-% CA, preferably at least 5 wt.-% CA, and at most 25, preferably at most 20, more preferably at most 15 wt.% CA.

7. Use according to any of the preceding claims, the calcium aluminate cement containing less than 1 wt.-% C₁₂A₇, and less than 5 wt.-% CA₆ and less than 5 wt.-% alpha-Al₂O₃, preferably less than 1 wt.-% C₁₂A₇, and less than 0.1 wt.-% CA₆ and less than 0.1 wt.-% alpha-Al₂O₃.

8. Use according to any of the preceding claims, the calcium aluminate cement containing aluminum, calculated as Al₂O₃ in the range from 72 to 78 wt.-%, in particular 73 to 77 wt.-%, based on the total weight of the calcium aluminate cement.

9. Use according to any of the preceding claims, the calcium aluminate cement containing calcium, calculated as CaO in the range from 20 to 30 wt.-%, in particular 20 to 26 wt.-%, based on the total weight of the calcium aluminate cement.

10. Use according to any of the preceding claims, the calcium aluminate cement containing less than 0.5 wt.-% Si, calculated as SiO₂, and in particular less than 0.5 wt.-% of each of Si, calculated as SiO₂, Na, calculated as Na₂O, Fe, calculated as Fe₂O₃ and Mg, calculated as MgO, further in particular less than 0.5 wt.-% of each of Si, calculated as SiO₂ ,Na, calculated as Na₂O, Fe, calculated as Fe₂O₃, Mg, calculated as MgO and Ti, calculated as TiO₂, and/or wherein the sum of Si, calculated as SiO₂, Na, calculated as Na₂O, Fe, calculated as Fe₂O₃ and optionally Mg, calculated as MgO is less than 1 wt.-%, based on the total weight of the calcium aluminate cement.

## Patentansprüche

1. Verwendung eines Calciumaluminatzements in Fertigteilformherstellung, insbesondere zum Erleichtern von Entfernen von Innenkernen aus Formkörpern, bevorzugt in der Herstellung von Lochblöcken, Sitz- oder Taschenblöcken, Düsen oder Hülsen, Brennerblöcken, Röhren, Elektrolichtbogenofen (EAF) Delta-Abschnitten, Fertigteilteilen für Stahlpfannenböden, oder Deckblöcken in Aluminiumanodenreduktionszellen, wobei der Calciumaluminatzement mindestens 75 Gew.-% CA₂ und mindestens 3 Gew.-% CA, bezogen auf die Gesamtmenge an in dem Zement vorhandenen Calciumaluminatphasen, enthält.

2. Verwendung gemäß Anspruch 1, wobei die Teilchengrößenverteilung des Calciumaluminatzements derart ist, dass der D₅₀ höchstens 6 µm, insbesondere höchstens 5 µm beträgt.

3. Verwendung gemäß einem der vorhergehenden Ansprüche, wobei die Teilchengrößenverteilung des Calciumaluminatzements derart ist, dass der D₅₀ zwischen 6 µm und 1 µm, bevorzugt zwischen 5 µm und 3 µm, stärker bevorzugt zwischen 3,5 µm und 4,5 µm liegt.

4. Verwendung gemäß einem der vorhergehenden Ansprüche, wobei die Teilchengrößenverteilung des Calciumaluminatzements derart ist, dass der D₉₀ höchstens 30 µm, insbesondere höchstens 28 µm beträgt, und/oder
wobei die Teilchengrößenverteilung derart ist, dass der D₉₀ zwischen 5 µm und 30 µm, stärker bevorzugt zwischen 10 µm und 27 µm, weiter bevorzugt zwischen 15 µm und 26 µm liegt, und/oder
wobei die Teilchengrößenverteilung derart ist, dass der D₁₀₀ 45 µm oder weniger beträgt, und/oder der D₁₀ zwischen 0,10 µm und 1 µm liegt.

5. Verwendung gemäß einem der vorhergehenden Ansprüche, wobei der Calciumaluminatzement mindestens 80 Gew.-% CA₂, und höchstens 97 Gew.-% CA₂, bevorzugt höchstens 96 Gew.-% CA₂, stärker bevorzugt höchstens 95 Gew.-% CA₂ enthält.

6. Verwendung gemäß einem der vorhergehenden Ansprüche, wobei der Calciumaluminatzement mindestens 4 Gew.-% CA, bevorzugt mindestens 5 Gew.-% CA, und höchstens 25, bevorzugt höchstens 20, stärker bevorzugt höchstens 15 Gew.-% CA enthält.

7. Verwendung gemäß einem der vorhergehenden Ansprüche, wobei der Calciumaluminatzement weniger als 1 Gew.-% C₁₂A₇, und weniger als 5 Gew.-% CA₆ und weniger als 5 Gew.-% alpha-Al₂O₃, bevorzugt weniger als 1 Gew.-% C₁₂A₇, und weniger als 0,1 Gew.-% CA₆ und weniger als 0,1 Gew.-% alpha-Al₂O₃ enthält.

8. Verwendung gemäß einem der vorhergehenden Ansprüche, wobei der Calciumaluminatzement Aluminium, berechnet als Al₂O₃, im Bereich von 72 bis 78 Gew.-%, insbesondere 73 bis 77 Gew.-%, bezogen auf das Gesamtgewicht des Calciumaluminatzements, enthält.

9. Verwendung gemäß einem der vorhergehenden Ansprüche, wobei der Calciumaluminatzement Calcium, berechnet als CaO, im Bereich von 20 bis 30 Gew.-%, insbesondere 20 bis 26 Gew.-%, bezogen auf das Gesamtgewicht des Calciumaluminatzements, enthält.

10. Verwendung gemäß einem der vorhergehenden Ansprüche, wobei der Calciumaluminatzement weniger als 0,5 Gew.-% Si, berechnet als SiO₂, und insbesondere jeweils weniger als 0,5 Gew.-% Si, berechnet als SiO₂, Na, berechnet als Na₂O, Fe, berechnet als Fe₂O₃, und Mg, berechnet als MgO, weiter insbesondere jeweils weniger als 0,5 Gew.-% Si, berechnet als SiO₂, Na, berechnet als Na₂O, Fe, berechnet als Fe₂O₃, Mg, berechnet als MgO, und Ti, berechnet als TiO₂, enthält und/oder wobei die Summe von Si, berechnet als SiO₂, Na, berechnet als Na₂O, Fe, berechnet als Fe₂O₃, und gegebenenfalls Mg, berechnet als MgO, weniger als 1 Gew.-%, bezogen auf das Gesamtgewicht des Calciumaluminatzements, beträgt.

## Revendications

1. Utilisation d'un ciment d'aluminate de calcium dans la production de formes préfabriquées, en particulier pour faciliter le démoulage de noyaux intérieurs, de préférence dans la production de briques de coulée, de briques de siège ou de poche, de tuyères ou manchons, de briques de brûleurs, de conduits, de sections delta de four à arc électrique (EAF), de pièces préfabriquées pour fonds de poche en acier ou de briques supérieures dans des cellules de réduction anodique en aluminium, le ciment d'aluminate de calcium contenant au moins 75% en poids de CA₂ et au moins 3% en poids de CA, par rapport à la quantité totale de phases d'aluminate de calcium présentes dans le ciment.

2. Utilisation selon la revendication 1, dans laquelle la distribution granulométrique du ciment d'aluminate de calcium est telle que le D₅₀ est d'au plus 6 µm, en particulier d'au plus 5 µm.

3. Utilisation selon l'une des revendications précédentes, dans laquelle la distribution granulométrique du ciment d'aluminate de calcium est telle que le D₅₀ est compris entre 6 µm et 1 µm, de préférence entre 5 µm et 3 µm, plus préférablement entre 3,5 µm et 4,5 µm.

4. Utilisation selon l'une des revendications précédentes, dans laquelle la distribution granulométrique du ciment d'aluminate de calcium est telle que le D₉₀ est d'au plus 30 µm, en particulier d'au plus 28 µm, et/ou
dans laquelle la distribution granulométrique est telle que le D₉₀ est compris entre 5 µm et 30 µm, plus préférablement entre 10 µm et 27 µm, encore plus préférablement entre 15 µm et 26 µm, et/ou
dans laquelle la distribution granulométrique est telle que le D₁₀₀ est inférieur ou égal à 45 µm, et/ou le D₁₀ est compris entre 0,10 µm et 1 µm.

5. Utilisation selon l'une des revendications précédentes, le ciment d'aluminate de calcium contenant au moins 80% en poids de CA₂, et au plus 97% en poids de CA₂, de préférence au plus 96% en poids de CA₂, plus préférablement au plus 95% en poids de CA₂.

6. Utilisation selon l'une des revendications précédentes, le ciment d'aluminate de calcium contenant au moins 4% en poids de CA, de préférence au moins 5% en poids de CA, et au plus 25, de préférence au plus 20, plus préférablement au plus 15% en poids de CA.

7. Utilisation selon l'une des revendications précédentes, le ciment d'aluminate de calcium contenant moins de 1% en poids de C₁₂A₇, et moins de 5% en poids de CA₆ et moins de 5% en poids d'alpha-Al₂O₃, de préférence moins de 1% en poids de C₁₂A₇, et moins de 0,1% en poids de CA₆ et moins de 0,1% en poids d'alpha-Al₂O₃.

8. Utilisation selon l'une des revendications précédentes, le ciment d'aluminate de calcium contenant de l'aluminium, calculé en tant que Al₂O₃ dans la plage allant de 72 à 78% en poids, en particulier de 73 à 77% en poids, par rapport au poids total du ciment d'aluminate de calcium.

9. Utilisation selon l'une des revendications précédentes, le ciment d'aluminate de calcium contenant du calcium, calculé en tant que CaO dans la plage allant de 20 à 30% en poids, en particulier de 20 à 26% en poids, par rapport au poids total du ciment d'aluminate de calcium.

10. Utilisation selon l'une des revendications précédentes, le ciment d'aluminate de calcium contenant moins de 0,5% en poids de Si, calculé en tant que SiO₂, et en particulier moins de 0,5% en poids de chacun de Si, calculé en tant que SiO₂, de Na, calculé en tant que Na₂O, de Fe, calculé en tant que Fe₂O₃ et de Mg, calculé en tant que MgO, en outre en particulier moins de 0,5% en poids de chacun de Si, calculé en tant que SiO₂, de Na, calculé en tant que Na₂O, de Fe, calculé en tant que Fe₂O₃, de Mg, calculé en tant que MgO et de Ti, calculé en tant que TiO₂, et/ou
dans laquelle la somme de Si, calculé en tant que SiO₂, de Na, calculé en tant que Na₂O, de Fe, calculé en tant que Fe₂O₃ et facultativement de Mg, calculé en tant que MgO est inférieure à 1% en poids, par rapport au poids total du ciment d'aluminate de calcium.
